# EUROPÄISCHE PATENTSCHRIFT

(11) **EP 3 658 299 B1**
(45) Veröffentlichungstag und Bekanntmachung des Hinweises auf die Patenterteilung: **07.09.2022**
(21) Anmeldenummer: 18740583.2
(22) Anmeldetag: 12.07.2018
(51) Int. Cl.: B06B 3/00, B23K 20/10

(54) **SONOTRODE SOWIE VERFAHREN ZUR BEEINFLUSSUNG DES SCHWINGVERHALTENS EINER SONOTRODE**
SONOTRODE AND METHOD FOR INFLUENCING THE VIBRATORY BEHAVIOR OF A SONOTRODE
SONOTRODE ET PROCÉDÉ PERMETTANT D'AGIR SUR LE COMPORTEMENT VIBRATOIRE D'UNE SONOTRODE

(30) Priorität: 28.07.2017 DE 102017117078
(43) Veröffentlichungstag der Anmeldung: 03.06.2020
(73) Patentinhaber: Schunk Sonosystems GmbH, 35435 Wettenberg (DE)
(72) Erfinder: MÜLLER, Stefan, 35580 Wetzlar (DE)
(74) Vertreter: Stoffregen, Hans-Herbert
(86) Internationale Anmeldenummer: PCT/EP2018/069021
(87) Internationale Veröffentlichungsnummer: WO 2019/020397

(56) Entgegenhaltungen:
- EP-A1- 2 591 864
- DE-A1- 1 427 329
- DE-B3- 10 360 623

## Beschreibung

Die Erfindung bezieht sich auf eine Sonotrode einer Ultraschallschweißvorrichtung mit einem Sonotrodenkörper mit Sonotrodenkopf mit zumindest einer in Längsrichtung des Sonotrodenkopfs verlaufenden Arbeitsfläche zum Schweißen bzw. Verschweißen und/oder Verformen und/oder Schneiden von zumindest einem metallischen Schweißgut, wobei der Sonotrodenkopf entlang der Arbeitsfläche voneinander abweichende Querschnitte aufweist.

Die Erfindung nimmt auch Bezug auf ein Verfahren zur Beeinflussung des Schwingungsverhaltens eines Sonotrodenkopfes einer in Längsrichtung schwingenden Sonotrode einer Ultraschallmetallschweißvorrichtung zum Schweißen, Verschweißen, Verformen und/oder Schneiden von metallischem Schweißgut, wobei der Sonotrodenkopf über einen Hals mit einem Sonotrodenkörper verbunden ist, und der Sonotrodenkopf in dessen Längsrichtung diametral und insbesondere parallel zueinander verlaufende Arbeitsflächen aufweist, die sich entlang erster Längsseiten des Sonotrodenkopfes erstrecken, die ihrerseits über zweite Längsseiten verbunden sind.

Beim Fügen von Werkstoffen mit Ultraschall wird die zum Schweißen benötigte Energie in Form von mechanischen Schwingungen in das Schweißgut eingebracht, wobei die Sonotrode an das ihr zugewandte Fügeteil angekoppelt wird und dieses bewegt. Gleichzeitig erfolgt eine Druckbeaufschlagung. Durch das Zusammenwirken der statischen und dynamischen Kräfte erfolgt ein Verschweißen, ohne dass es weiterer Zusatzwerkstoffe bedarf. Beim Ultraschallmetallschweißen werden die mechanischen Schwingungen parallel zur Fügefläche ausgerichtet. Es kommt zu einer komplexen Beziehung zwischen statischer Kraft, den oszillierenden Scherkräften und einem moderaten Temperaturanstieg in der Schweißzone. Hierzu wird der Werkstoff bzw. werden die Werkstoffe zwischen der schwingenden Sonotrode und einer statischen Gegenelektrode angeordnet.

Das Ultraschallmetallschweißen wird auch zum fluiddichten Abdichten und Trennen von Metallröhrchen eingesetzt, wie diese für Kühlaggregate, insbesondere Klimageräte oder Kühlschränke, benötigt werden. Vorrichtungen, mit denen entsprechende Schweißungen durchgeführt werden, sind z.B. der DE 103 60 623 B3 oder der DE 10 2015 206 866 B3 zu entnehmen.

Um reproduzierbare Schweißergebnisse hoher Güte zu erzielen, sollte die Auslenkung der Sonotrode, d.h. des Sonotrodenkopfes vorwiegend entlang dessen Längsrichtung, also in Richtung der Ultraschallschwingungen erfolgen. Um ein entsprechendes senkrecht zur Ultraschallschwingungsrichtung verlaufendes Auslenken zu vermeiden bzw. zu reduzieren, sieht die DE 50 2004 002 817 C5 eine Versteifung des Sonotrodenkopfes im Stirnbereich vor, die als Rippe ausgebildet sein kann.

Werden beim Ultraschallmetallschweißen die Schwingungen parallel zur Fügefläche ausgerichtet, so verlaufen die Schwingungen beim Ultraschallkunststoffschweißen senkrecht zur Fügefläche. Der Sonotrodenkopf selbst kann dabei eingangs- und ausgangsseitig voneinander abweichende Querschnittsflächen aufweisen, wie dies der DE 203 14 781 U1 zu entnehmen ist.

Bei für das Ultraschallmetallschweißen bestimmten Sonotrodenköpfen mit Arbeitsflächen, die zur Vergleichmäßigung des Verschleiß und somit zur Maximierung des Nutzungsgrades nacheinander in unterschiedlichen Positionen auf das Schweißgut einwirken, ist der Nachteil gegeben, dass nach Nutzung eines neuen Bereichs der Arbeitsfläche eine erneute Parameterermittlung durchzuführen ist, um optimale Schweißergebnisse erzielen zu können. Hierdurch sind Stillstandzeiten in Kauf zu nehmen. Dabei werden die Positionen z.B. nach tausend Schweißungen verändert.

Der vorliegenden Erfindung liegt die Aufgabe zugrunde, eine Sonotrode der eingangs genannten Art so weiterzubilden, dass Stillstandzeiten durch Veränderung der Schweißposition reduziert werden bei gleichzeitiger hoher Güte der Schweißergebnisse. Das Schwingungsverhalten des Sonotrodenkopfes soll optimiert werden. Schweißungen gleichbleibender Qualität sollen erreicht werden.

Zur Lösung der Aufgabe wird nach der erfindungsgemäßen Lehre eine Sonotrode der eingangs genannten Art im Wesentlichen derart weitergebildet, dass der Querschnitt des Sonotrodenkopfes am stirnseitig verlaufenden Endbereich der Arbeitsfläche größer als im mittleren Bereich der Arbeitsfläche ist.

Besonders bevorzugt ist der Querschnitt des Sonotrodenkopfes vom stirnseitig verlaufenden Endbereich der Arbeitsfläche ausgehend bis hin zum sonotrodenkörperseitigen Endbereich der Arbeitsfläche abnehmend ausgebildet, wobei insbesondere eine stetige Querschnittsveränderung erfolgt. Dabei kann gegebenenfalls der Sonotrodenkopf unmittelbar in dessen Stirnbereich zunächst einen konstanten Querschnitt aufweisen, der sodann reduziert wird.

Alternativ ist vorgesehen, dass der Querschnitt des Sonotrodenkopfes vom stirnseitig verlaufenden Endbereich der Arbeitsfläche ausgehend zunächst abnimmt und sodann zum sonotrodenkörperseitigen Endbereich der Arbeitsfläche zunimmt. Dabei ist insbesondere vorgesehen, dass insbesondere der Querschnitt des Sonotrodenkörpers im Mittenbereich der Arbeitsfläche am geringsten ist.

Überraschenderweise hat sich gezeigt, dass durch eine spezielle geometrische Ausbildung des Sonotrodenkopfes einer Ultraschallmetallschweißvorrichtung, also durch die erfindungsgemäße Querschnittsänderung, das Schwingungsverhalten bzw. Übersetzungsverhältnis derart verändert wird, dass Abweichungen bei erfolgten Positionsänderungen der Schweißungen geringer als bei Sonotroden ausfallen die einen konstanten Querschnitt aufweisen. Es konnte eine Amplitudenvergleichmäßigung dahingehend festgestellt werden, dass die Änderung der Amplitude in Abhängigkeit von der Schweißposition geringer ausfällt als bei Sonotroden mit konstantem Querschnitt entlang der Arbeitsfläche, so dass mehr Schweißungen durchgeführt werden können, ohne dass eine erneute Parameterermittlung notwendig ist. Die Stillstandzeiten können verkürzt werden mit der Folge, dass die Anzahl der Schweißungen pro Zeiteinheit erhöht werden konnte.

Insbesondere zeichnet sich die Erfindung hinsichtlich eines Sonotrodenkopfes mit zunächst abnehmendem und sodann wieder ansteigendem Querschnitt dadurch aus, dass der Querschnitt des Halses im Bereich seines geringsten Querschnitts im Vergleich zu Sonotrodenköpfen gleichbleibenden Querschnitts entlang der Arbeitsfläche bzw. -flächen reduziert wird, wodurch ein eigenes Schwingungsverhalten des Sonotrodenkopfes erzielt wird, durch das die Vergleichmäßigung des Schwingungsverhaltens ungeachtet unterschiedlicher Schweißpositionen erzielt wird. Entsprechend dem Stand der Technik sollte der Sonotrodenkopf zwei diametral gegenüberliegende und insbesondere parallel zueinander verlaufende Arbeitsflächen aufweisen, die von ersten Längsseiten des Sonotrodenkopfes ausgehen, wobei die ersten

Längsseiten über zweite Längsseiten miteinander verbunden sind. Erfindungsgemäß ist 5 sodann vorgesehen, dass durch Verlaufsänderung der zweiten Längsseiten die Querschnittsänderung des Sonotrodenkopfes im Bereich der Arbeitsflächen erfolgt.

Insbesondere sieht die Erfindung vor,
- dass der Querschnitt des Sonotrodenkopfes im stirnseitigen Endbereich der 10 Arbeitsflächen Q2 ist,
- dass bei von stirnseitigem Endbereich der Arbeitsfläche ausgehendem sich bis hin zum sonotrodenkörperseitigen Endbereich der Arbeitsfläche verjüngenden Querschnitt der Querschnitt des Sonotrodenkopfes im sonotrodenkörperseitigen Endbereich Q3 ist und der Hals eine Linie oder einen Bereich geringsten Querschnits Q1 durchläuft,
- dass bei vom stirnseitig verlaufenden Endbereich der Arbeitsfläche ausgehendem zunächst abnehmenden und sodann zum sonotrodenkörperseitigen Endbereich der Arbeitsfläche zunehmenden Querschnitt der Sonotrodenkopf im Bereich geringsten Querschnitts zwischen stirnseitig verlaufendem und sonotrodenkörperseitigem 20 Endbereichen der Arbeitsfläche Q5 ist, wobei der Querschnitt im sonotrodenkörperseitigen Endbereich der Arbeitsfläche Q4 ist und der Hals eine Linie oder einen Bereich geringsten Querschnitts Q6 durchläuft, wobei
   Q2:Q1 zwischen 2,0:1 und 1,1:1 und/oder
   Q2:Q3 zwischen 2,0:1 und 1,05:1 und/oder
   Q2:Q5 zwischen 2,0:1 und 1,05:1 und/oder
   Q2:Q6 zwischen 2,0:1 und 1,1:1 und/oder
   Q4:Q5 zwischen 2,0:1 und 1,05:1 und/oder
   Q3:Q1 zwischen 1,5:1 und 1,1:1 und/oder
   Q5:Q6 zwischen 1,5:1 und 1,1:1 und/oder
      sind mit der Nebenbedingung, dass Q1 kleiner als Q2, Q3 und Q6 kleiner als Q2, Q4, Q5 und Q3 kleiner als Q2 und Q5 kleiner als Q2, Q4 sind,
- wobei insbesondere Q2:Q3 sich verhält zwischen 1,05:1 und 1,20:1, vorzugsweise zwischen 1,05:1 und 1,15:1, insbesondere etwa 1,1:1, und/oder insbesondere Q5:Q6 sich verhält wie 1,21:1 bis 1,30:1, insbesondere in etwa 1,26:1, und/oder
   insbesondere Q2:Q6 zwischen 1,40:1 und 1,55:1, insbesondere etwa 1,47:1, und/oder
   insbesondere Q2:Q5 zwischen 1,12:1 und 1,20:1, insbesondere in etwa 1,16:1, und/oder
   insbesondere Q2:Q1 zwischen 1,22:1 und 1,30:1, insbesondere in etwa 1,26:1, und/oder
   insbesondere Q2:Q4 zwischen 1:1 und 1,04:1, insbesondere in etwa 1,02:1.

Ein Verfahren zum Beeinflussen des Schwingungsverhaltens eines Sonotrodenkopfes einer in Längsrichtung schwingenden Sonotrode einer Ultraschallmetallschweißvorrichtung, wobei der Sonotrodenkopf über einen Hals mit einem Sonotrodenkörper verbunden ist, und der Sonotrodenkopf in dessen Längsrichtung diametral und parallel zueinander verlaufende Arbeitsflächen aufweist, die sich entlang erster Längsseiten des Sonotrodenkopfs erstrecken, die ihrerseits über zwei zweite Längsseiten verbunden sind, zeichnet sich insbesondere dadurch aus, dass ein Sonotrodenkopf verwendet wird, dessen zweite Längsseiten derart bearbeitet sind, dass entlang der Arbeitsflächen eine Querschnittsänderung des Sonotrodenkopfs erfolgt.

Entlang jeder ersten Längsseite verläuft zumindest eine Arbeits- oder Schweißfläche, entlang der gegebenenalls sich eine Schneidkante erstreckt. Auch können entlang jeder ersten Seitenfläche zwei Arbeitsflächen verlaufen, zwischen denen sich eine Erhebung mit zwei Schneidkanten erstreckt. Diesbezügliche Sonotrodengeometrien sind insbesondere zum Schweißen und Trennen von Metallröhrchen bestimmt, wie diese für Kühlaggregate Verwendung finden.

Dabei werden die zweiten Längsseiten derart bearbeitet, dass Abstand der Längsseiten von stimseitig verlaufendem Endbereich der Arbeitsfläche ausgehend bis hin zum sonotrodenkörperseitig verlaufenden Endbereich der Arbeitsflächen abnimmt.

Es besteht jedoch auch die Möglichkeit, dass ein Bearbeiten der zweiten Seitenflächen des Sonotrodenkopfs derart erfolgt, dass die zweiten Seitenflächen einen konkaven Verlauf erhalten. Dabei ist insbesondere vorgesehen, dass im Vergleich zu Sonotrodenköpfen mit gleichbleibendem Querschnitt entlang der Arbeitsflächen der Hals derart verjüngt wird, dass sich das Verhältnis vom Querschnitt Q2 im stirnseitig verlaufenden Endbereich der Arbeitsfläche zum geringsten Querschnitt Q6 des Halses verhält wie Q2:Q6 zwischen 2,0:1 und 1,1:1, vorzugsweise zwischen 1,40:1 und 1,55:1, insbesondere in etwa 1,47:1.

Der geringste Querschnitt Q5 zwischen den stirnseitig verlaufenden Endbereichen der Arbeitsflächen sollte sich zu dem geringsten Querschnitt Q6 des Halses verhalten zwischen 1,5:1 und 1,1:1, vorzugsweise zwischen 1,21:1 und 1,30:1, insbesondere in etwa 1,26:1.

Bei im Wesentlichen stetig abnehmendem Querschnitt beginnend vom stirnseitig verlaufenden Endbereich in Richtung des sonotrodenkörperseitigen Endbereichs der Arbeitsflächen sollte der größte Querschnitt Q2 im Bereich der Arbeitsfläche zum geringsten Querschnitt Q1 des Halses zwischen 2,0:1 und 1,1:1, vorzugsweise zwischen 1,22:1 bis 1,30: 1 liegen, insbesondere in etwa 1,26:1 betragen.

Der Querschnitt Q2 im stirnseitigen Endbereich der Arbeitsfläche des Sonotrodenkopfs im Vergleich zum Querschnitt Q3 im sonotrodenkörperseitigen Endbereich der Arbeitsfläche sollte betragen: Q2:Q3 zwischen 2,0:1 und 1,05:1, vorzugsweise zwischen 1,05:1 bis 2,0:1, insbesondere 1,05:1 und 1,5:1, vorzugsweise in etwa 1,1:1.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Prinzipdarstellung einer Ultraschallschweißvorrichtung,
- Fig. 2: eine Sonotrode nach dem Stand der Technik,
- Fig. 3: eine erste Ausführungsform einer erfindungsgemäßen Sonotrode,
- Fig. 4: die Sonotrode gemäß Fig. 3 in Draufsicht,
- Fig. 5: eine der Fig. 3 entsprechende Sonotrode mit fehlender Versteifung,
- Fig. 6: die Darstellung gemäß Fig. 4 mit Schnittlinien,
- Fig. 7: einen Schnitt entlang der Linie C-C in Fig. 6,
- Fig. 8: einen Schnitt entlang der Linie B-B in Fig. 6,
- Fig. 9: einen Schnitt entlang der Linie A-A in Fig. 6,
- Fig. 10: eine erste Seitenansicht der Sonotrode gemäß Fig. 3,
- Fig. 11: eine zweite Seitenansicht der Sonotrode gemäß Fig. 3,
- Fig. 12: eine zweite Ausführungsform einer erfindungsgemäßen Sonotrode,
- Fig. 13: die Sonotrode gemäß Fig. 12 in Draufsicht,
- Fig. 14: eine Variante der Sonotrode gemäß Fig. 12,
- Fig. 15: eine Darstellung gemäß Fig. 14 mit Schnittlinien,
- Fig. 16: einen Schnitt entlang der Linie C-C in Fig. 15,
- Fig. 17: einen Schnitt entlang der Linie B-B in Fig. 15,
- Fig. 18: einen Schnitt entlang der Linie A-A in Fig. 15,
- Fig. 18a: einen Schnitt entlang der Linie G-G in Fig. 15,
- Fig. 19: eine erste Seitenansicht der Sonotrode gemäß Fig. 12,
- Fig. 20: eine zweite Seitenansicht der Sonotrode gemäß Fig. 12 und
- Fig. 21 - 29: eine Variante der Sonotrode gemäß Fig. 3 - 11.

Anhand der Figuren, in denen gleiche Elemente mit gleichen Bezugszeichen versehen sein können, soll die erfindungsgemäße Lehre näher erläutert werden, auf Grund der das Schwingungsverhalten einer Sonotrode verbessert wird.

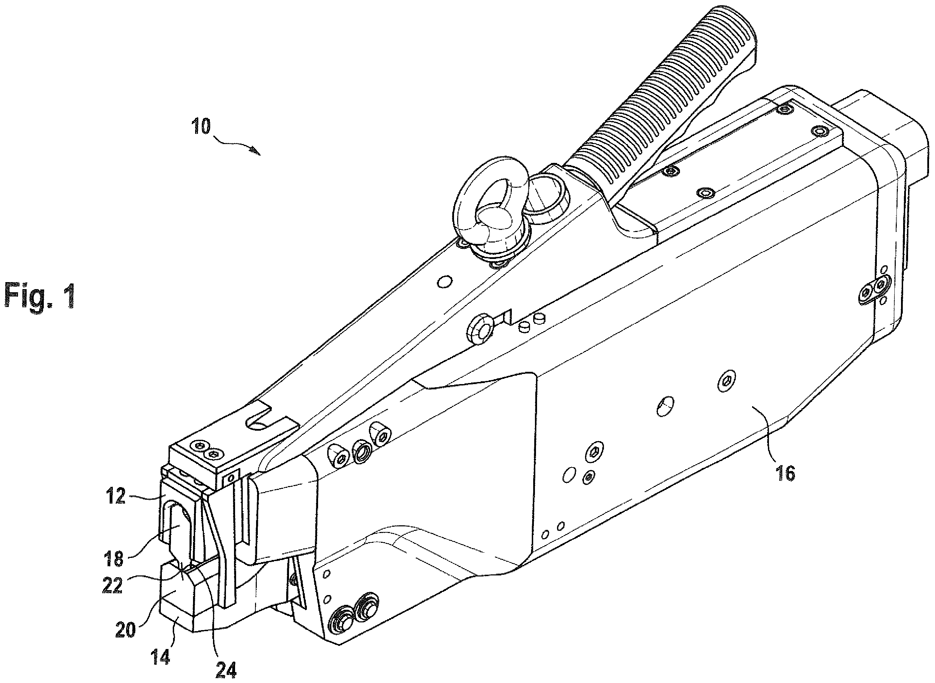

In Fig. 1 ist in Prinzipdarstellung eine Ultraschallschweißvorrichtung in Form einer Ultraschallschweißzange 10 dargestellt, die ein oberes und unteres Zangenteil 12, 14 aufweist, die in einem Gehäuse 16 angeordnet sind. Das obere Zangenteil 12 weist als wesentlichen Bestandteil eine Ultraschallschwingungseinrichtung mit im vorderen Teil des Gehäuses 16 angeordneter Sonotrode 18 auf, die eine erste Schweißbacke bildet. Die Sonotrode 18 ist in Längsrichtung in Schwingung versetzbar.

Gegenüberliegend der Sonotrode 18 ist eine Gegenelektrode oder Amboss 20 in dem unteren Teil des Gehäuses 16 angeordnet. Dabei ist der Amboss 20 über eine nicht dargestellte Schwenkachse verschwenkbar zu der Sonotrode 18 ausgebildet, so dass ein zwischen der Arbeits- oder Schweißfläche 22 der Sonotrode 18 und der dieser zugeordneten Arbeitsfläche 24 des Ambosses 20 angeordnetes Schweißgut, wie Metallröhrchen, bei gleichzeitigem Abquetschen und Schweißen durchtrennt werden kann.

Hierdurch wird die erfindungsgemäße Lehre jedoch nicht eingeschränkt. Vielmehr gilt diese für die Ausbildung von Sonotroden, mit denen aus Metall bestehendes Schweißgut geschweißt bzw. verschweißt und verformt werden soll, ganz allgemein.

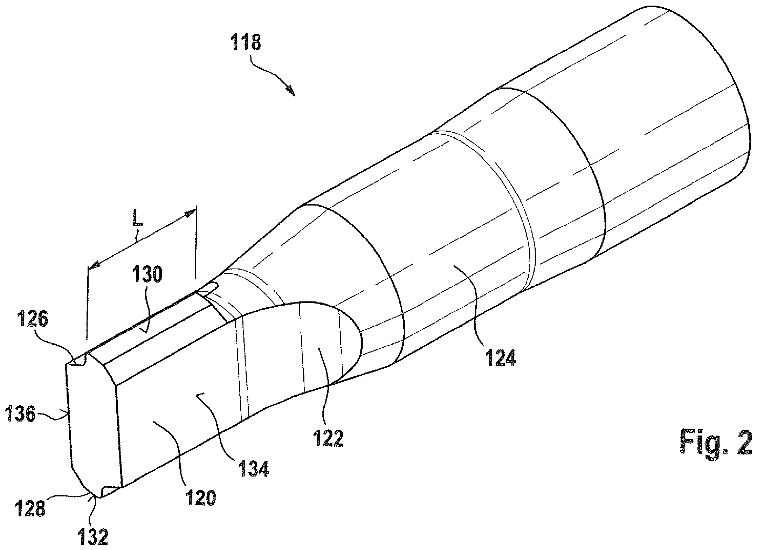

Die Sonotrode 18 weist die in deren Längsrichtung verlaufende Arbeitsfläche 22 auf, wie dies anhand der Fig. 2 verdeutlicht wird. Dieser ist eine Sonotrode 118 nach dem Stand der Technik zu entnehmen.

Die Sonotrode 118 besitzt einen Sonotrodenkopf 120, der über einen Sonotrodenhals 122 in einen Sonotrodenkörper 124 übergeht. Der Sonotrodenkopf 120 weist in diametral gegenüberliegenden ersten Längsseiten 126, 128 Arbeitsflächen 130, 132 auf, die vorzugsweise parallel zueinander verlaufen und eine Längenerstreckung L zwischen 10 mm und 100 mm aufweisen können. Die ersten Längsseiten oder -flächen 126, 128 werden über zweite Seitenflächen 134, 136 verbunden, die parallel zueinander verlaufen.

Um den Nutzungsgrad der Sonotrode 118 zu optimieren, erfolgt nach einer vorgegebenen Anzahl von Schweißungen eine Veränderung der Schweißposition, d.h., dass das zu schweißende Material wird in verschiedenen Positionen der Arbeitsfläche 130 bzw. nach Drehen der Sonotrode 118 mit der Arbeitsfläche 132, die gleichfalls als Schweißfläche zu bezeichnen ist, beim Schweißen kontaktiert.

Bei üblichen Produktionen kann eine Positionsverstellung z.B. nach 1000 Schweißungen erfolgen, wodurch eine Vergleichmäßigung des Verschleißes erfolgt. Hierdurch erfolgt eine Maximierung des Nutzungsgrades.

Nach Verstellen der Schweißposition ist es jedoch erforderlich, dass erneut eine Ermittlung der Parameter erfolgt, um optimierte Schweißergebnisse zu erzielen. Eine entsprechende Parameterermittlung und Einstellung erfolgt durch qualifiziertes Personal. Zur Ermittlung der Parameter kann die Ultraschallschweißvorrichtung nicht genutzt werden mit der Folge, dass auf Grund der hierdurch bedingten Stillstandszeiten im Produktionsablauf Kostennachteile entstehen.

Erfindungsgemäß wird der Sonotrodenkopf derart ausgebildet, dass es nicht erforderlich ist, dass nach jeder Schweißpositionsänderung eine Parameterermittlung erfolgen muss, da eine Vergleichmäßigung des Schwingungsverhaltens bzw. der Amplitude der Sonotrode ungeachtet einer Positionsveränderung von zu schweißendem Gut erfolgt.

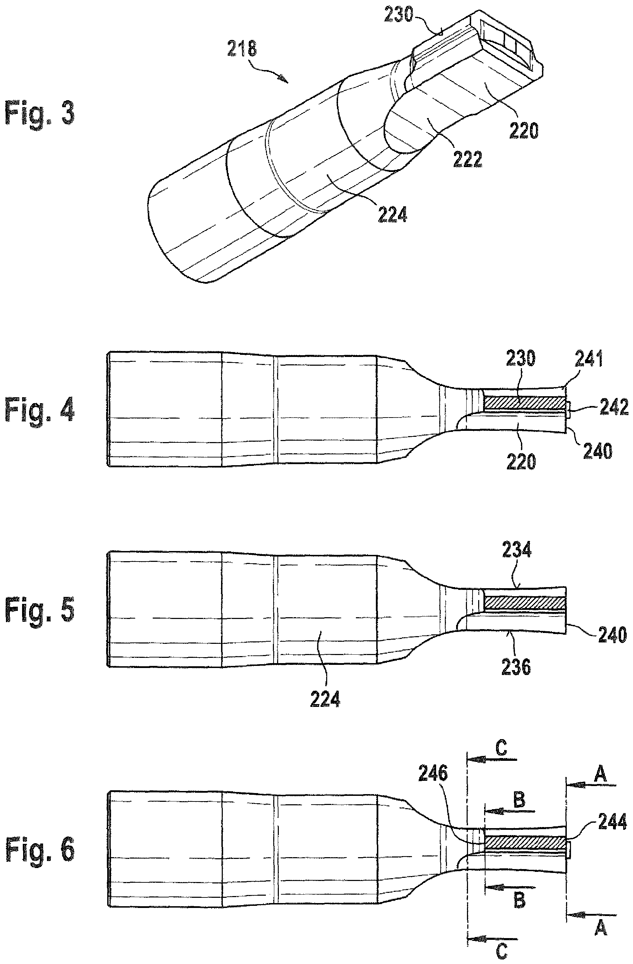

In den Fig. 3 bis 11 ist eine erste Ausführungsform einer Sonotrode 218 dargestellt, die der erfindungsgemäßen Lehre folgt. Die Sonotrode 218 besteht ebenfalls aus einem Sonotrodenkopf 220, einem Hals 222 und einem Sonotrodenkörper 224.

Entlang gegenüberliegender erster Längsseiten oder -flächen 226, 228 des Sonotrodenkopfs 220 verlaufen parallel zueinander Arbeitsflächen 230, 232, die die Funktion von Schweißflächen ausüben und gleichzeitig ein Verformen von Schweißgut ermöglichen, wie dies beim Schweißen und Abquetschen von Röhrchen der Fall ist, wie dies zuvor erläutert worden ist. Ferner sind nicht schutzeinschränkend im Ausführungsbeispiel die Arbeitsflächen 230, 232 von einer Schneidkante 245, 247 begrenzt, um entsprechende Röhrchen durchtrennen zu können. Hierzu weist die der Sonotrode 218 bzw. dem Sonotrodenkopf 220 zugeordnete Gegenelektrode eine entsprechende Kante auf.

Der Sonotrodenkopf 220 weist folglich eine Geometrie auf, wie diese prinzipiell der Fig. 2 der DE 103 60 623 B3 zu entnehmen ist. Dieser ist auch die der Schneidkante zugeordnete Kante des Ambosses zu entnehmen.

Insbesondere ist die erfindungsgemäße Lehre auch für Sonotroden bestimmt, die zwei Schneidkanten aufweisen, wie diese der Fig. 3 der DE 103 60 623 B3 zu entnehmen ist.

Allerdings beschränkt sich die Erfindung nicht auf eine entsprechende Ausführungsform. Vielmehr gilt die erfindungsgemäße Lehre für übliche Sonotroden, mit denen Metall geschweißt wird, also auch Bleche, Litzen o.ä.

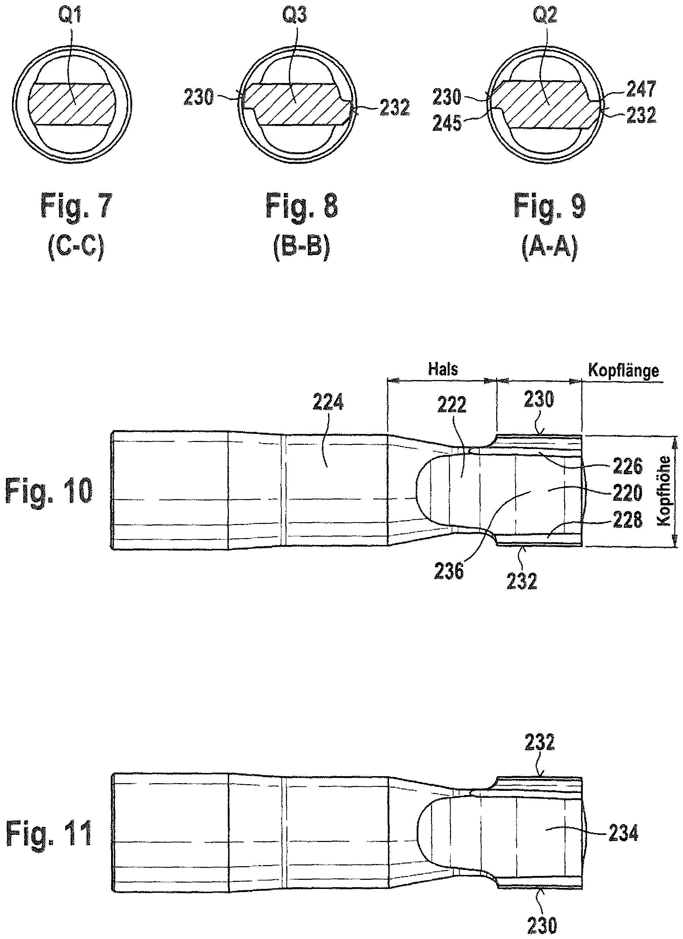

Die Länge des Halses 222 und die des Sonotrodenkopfes 220 ist in Fig. 10 eingezeichnet. Die Höhe des Kopfes 220 entspricht dem Abstand der Arbeitsflächen 230, 232.

Eine Draufsicht auf die Sonotrode 218 ist der Fig. 4 zu entnehmen. Das Ausführungsbeispiel der Fig. 5 unterscheidet sich von dem der Fig. 4 einzig und allein dadurch, dass über der Stirnseite 240 keine Versteifung 242, wie Rippe, vorsteht, um ein unerwünschtes Auslenken senkrecht zur Schwingungsrichtung zu reduzieren. Die Versteifung 242 folgt der Lehre der DE 50 2004 002 817 C5.

Abweichend von der konventionellen Sonotrode 118, wie diese der Fig. 2 zu entnehmen ist, weist der Sonotrodenkopf 220 entlang der Arbeits- oder Schweißflächen 230, 232 einen Querschnittsverlauf derart auf, dass im stirnseitig verlaufenden Bereich der Arbeitsfläche 230, 232 der Sonotrodenkopf 220 einen größeren Querschnitt als im sonotrodenkörperseitig verlaufenden Endbereich der Arbeitsfläche 230, 232 aufweist. Der stirnseitige Bereich ist in Fig. 6 mit dem Bezugszeichen 244 und der körperseitige Endbereich mit dem Bezugszeichen 246 gekennzeichnet.

Der Abstand der die ersten Längsseitenflächen 226, 228 verbindenden zweiten Seitenflächen 234, 236 nimmt folglich von der Stirnseite 240 in Richtung des Sonotrodenkörpers 224 ab, wie sich insbesondere aus den Schnittdarstellungen der Fig. 8 und Fig. 9 ergibt.

Der Schnitt gemäß Fig. 7 ist der Schnitt entlang der Linie C-C, in dem der Sonotrodenhals 222 den geringsten Querschnitt aufweist. Dieser Querschnitt ist mit Q1 gekennzeichnet. Der Schnitt entlang der Linie A-A (Fig. 9) ist derjenige des Sonotrodenkopfes 220, in dem der stirnseitige Endbereich 244 der Arbeitsfläche 230, 232 verläuft. Der Querschnitt ist mit Q2 gekennzeichnet.

Ferner ist im körperseitigen Endbereich 246 der Arbeitsfläche 230, 232 ein weiterer Schnitt B-B gelegt, der in Fig. 8 mit dem Bezugszeichen Q3 gekennzeichnet ist. Die Querschnitte sollten sich dabei bevorzugterweise wie folgt verhalten:

| | |
|---|---|
| Q2:Q3 | zwischen 1,05:1 und 1,20:1, vorzugsweise zwischen 1,05:1 und 1,15:1, insbesondere etwa 1,1:1 |
| Q2:Q1 | zwischen 1,22:1 und 1,30:1, insbesondere in etwa 1,26:1 |
| Q3:Q1 | zwischen 1,12:1 und 1,20:1, insbesondere in etwa 1,16:1 |

Anzumerken ist, dass bei einer diesbezüglichen Gestaltung des Sonotrodenkopfes 220 Veränderungen an sonstigen Bauteilen der Sonotrode 218 grundsätzlich nicht erforderlich sind, d.h., die Geometrie des Halses 222 und des Sonotrodenkörpers 224 können denen der Sonotrode 118 entsprechen, bei der der Sonotrodenkopf 120 über die Länge der Arbeitsflächen 130, 132 einen gleichbleibenden Querschnitt aufweist, also die Seitenflächen 134, 136 parallel zueinander verlaufen.

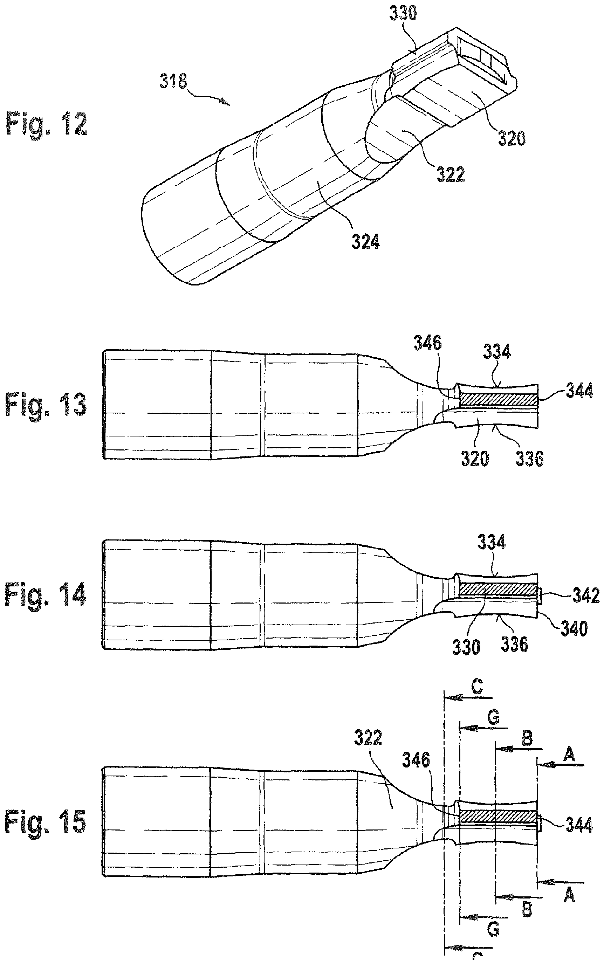

Den Fig. 12 bis 20 ist eine weitere Ausführungsform einer erfindungsgemäß ausgebildeten Sonotrode 318 zu entnehmen, die sich gleichfalls in Bezug auf deren Sonotrodenkopf 320 von dem der Sonotrode 118 unterscheidet. Unabhängig hiervon geht der Sonotrodenkopf 320 gleichfalls über ein Sonotrodenhals 322 in einen Sonotrodenkörper 324 über.

Geht bei der isometrischen Darstellung gemäß Fig. 12 von der Stirnfläche 340 eine Versteifung 342 aus, so ist dies kein zwingendes Merkmal, wie anhand der Fig. 13 verdeutlicht wird.

Entsprechend dem Ausführungsbeispiel der Fig. 3 bis 11 weist der Sonotrodenkopf 320 entlang von zwei ersten schmalen Seitenflächen 326, 328 sich erstreckende Arbeits- oder Schweißflächen 330, 332 auf, die jeweils von einer Schneidkante 345, 347 begrenzt sind, denen eine entsprechende Schneidkante in der Gegenelektrode zugeordnet ist, um beim Schweißen von Metallröhrchen diese durchtrennen zu können. Selbstverständlich können auf jeder ersten Seitenfläche 326, 628 zwei Schneidkanten vorgesehen sein, die zwischen Arbeits- oder Schweißflächen verlaufen, wie diese der Fig. 3 der DE 103 60 623 B3 zu entnehmen sind.

Die ersten Längsseitenflächen 326, 328 sind über zwei zweite Seitenflächen 334, 336 verbunden, die nachstehend erläuterten Verlauf aufweisen, um entsprechend der erfindungsgemäßen Lehre den Sonotrodenkopf 320 derart zu gestalten, dass dieser entlang der Arbeits- oder Schweißflächen 330, 332 einen Verlauf mit sich änderndem Querschnitt aufweist. Die Begrenzungen der Arbeitsflächen 330, 332 sind mit den Bezugszeichen 344, 346 gekennzeichnet.

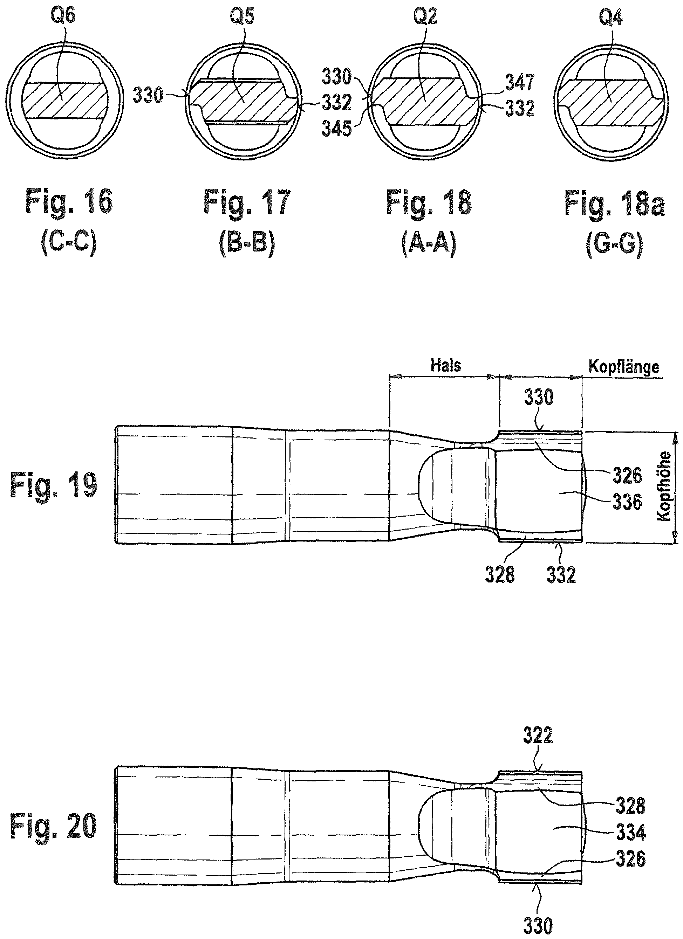

Wie insbesondere die Draufsichten gemäß der Fig. 13 bis 15 verdeutlichen, weist der Sonotrodenkopf 320 eine Geometrie derart auf, dass die zweiten Seitenflächen 334, 336 einen konkaven Verlauf zeigen, d.h., dass der Querschnitt im stirnseitigen Endbereich 344 des Sonotrodenkopfes 320 größer als Mittenbereich (Schnitt B-B in Fig. 15) ist. Im sonotrodenkörperseitigen Endbereich 346 weist der Sonotrodenkopf 320 in etwa den Querschnitt des stirnseitigen Endbereichs 344 auf. Der konkave Verlauf der zweiten Seitenfläche 334, 336 ist dabei derart, dass sich ein symmetrischer Verlauf entlang einer Ebene ergibt, in der zum einen die Längsachse der Sonotrode 318 verläuft und die sich zum anderen parallel zu den Arbeits- bzw. Schweißflächen 330, 332 erstreckt. Entsprechung der Schnittdarstellung gemäß der Fig. 17 und 18 ist der Querschnitt des Sonotrodenkopfes 320 im stirnseitigen Endbereich 344 der Arbeitsfläche 330, 332 Q2 und im Mittenbereich, also im Bereich geringsten Querschnitts, der Querschnitt Q5. Im sonotrodenkörperseitig verlaufenden Endbereich 346 ist der Querschnitt Q4 (Fig. 18a). Dieser entspricht dem Querschnitt Q2.

Abweichend von der Konstruktion der Sonotrode 218 erfolgt bei dem konkaven Verlauf der zweiten Seitenflächen 334, 336 eine Veränderung des Halses 322 derart, dass dieser weitergehend verjüngt ist, d.h., dass der geringste Querschnitt (Schnitt C-C) Q6 kleiner als der geringste Querschnitt Q1 bei der Sonotrode 218 ist. Insbesondere sollten folgende Querschnittsverhältnisse gegeben sein:

| | |
|---|---|
| Q2 : Q6 | zwischen 1,40:1 und 1,55:1, insbesondere in etwa 1,47:1, |
| Q2 : Q5 | zwischen 1,12:1 und 1,20:1, insbesondere in etwa 1,16:1, |
| Q5 : Q6 | zwischen 1,21:1 und 1,30:1, insbesondere in etwa 1,26:1. |

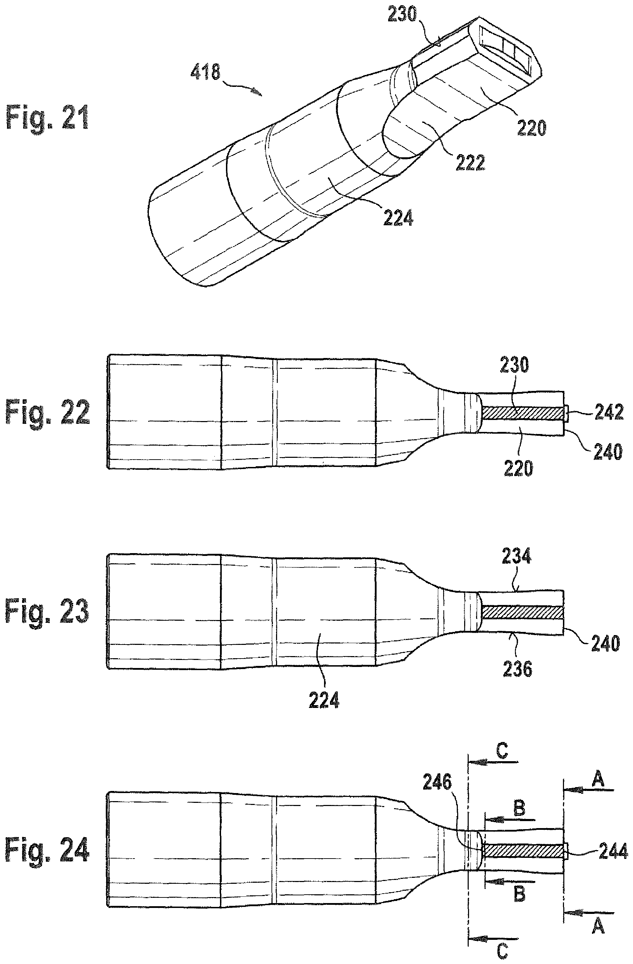

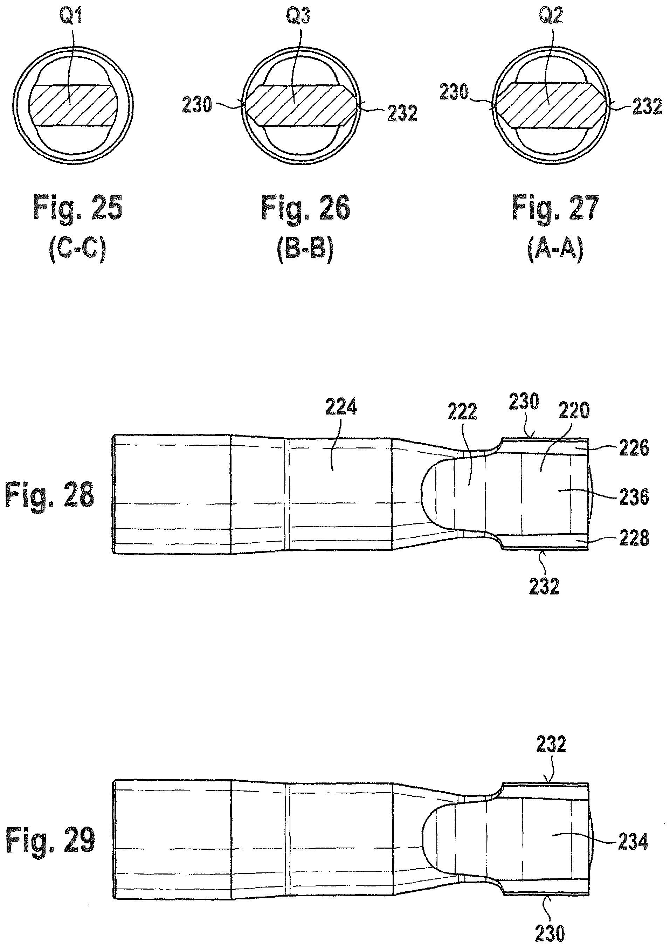

Das Ausführungsbeispiel der Fig. 21 bis 29 entspricht im Grunde dem der Fig. 3 bis 11 mit der Einschränkung, dass der Sonotrodenkopf 220 keine Schneidkanten aufweist, die entlang der Arbeitsflächen 230, 232 verlaufen. Ansonsten weist die Sonotrode 418 eine gleiche Geometrie wie die Sonotrode 214 auf, so dass gleiche Bezugszeichen verwendet werden. Die Beschreibung der Sonotrode 218 gilt für die Sonotrode 418 gleichermaßen.

## Patentansprüche

1. Sonotrode (218, 318, 418) einer Ultraschallschweißvorrichtung mit einem Sonotrodenkörper (224, 324) mit Sonotrodenkopf (220, 320) mit zumindest einer in Längsrichtung des Sonotrodenkopfes verlaufenden Arbeitsfläche (230, 232, 330, 332) zum Schweißen bzw. Verschweißen und/oder Verformen und/oder Schneiden von zumindest einem metallischen Schweißgut, wobei der Sonotrodenkopf (220, 320) entlang der Arbeitsfläche (230, 232, 330, 332) voneinander abweichende Querschnitte aufweist, .
**dadurch gekennzeichnet,**
**dass** der Querschnitt des Sonotrodenkopfes (220, 320) im stirnseitig verlaufenden Endbereich (211, 344) der Arbeitsfläche (230, 232, 330, 332) größer als im Mittenbereich der Arbeitsfläche ist.

2. Sonotrode nach Anspruch 1,
**dadurch gekennzeichnet,**
**dass** der Querschnitt des Sonotrodenkopfes (220, 320) vom stirnseitig verlaufenden Endbereich (244, 344) der Arbeitsfläche (230, 232, 330, 332) bis hin zum sonotrodenkörperseitigen Endbereich (246, 346) abnimmt, insbesondere stetig abnimmt.

3. Sonotrode nach Anspruch 1,
**dadurch gekennzeichnet,**
**dass** der Querschnitt des Sonotrodenkopfes (320) vom stirnseitig verlaufenden Endbereich (344) der Arbeitsfläche (330, 332) ausgehend zunächst abnimmt und sodann zum sonotrodenkörperseitigen Endbereich (346) der Arbeitsfläche (330, 332) zunimmt.

4. Sonotrode nach Anspruch 3,
**dadurch gekennzeichnet,**
**dass** der Querschnitt des Sonotrodenkopfes (320) im Mittenbereich der Arbeitsfläche (330, 332) am geringsten ist.

5. Sonotrode nach zumindest einem der vorhergehenden Ansprüche,
**dadurch gekennzeichnet,**
**dass** der Sonotrodenkopf (220, 320) in ersten Längsseiten (226, 228, 326, 328) parallel zueinander verlaufende Arbeitsflächen (230, 232, 330, 332) aufweist, wobei die ersten Längsseiten über zweite Längsseiten (234, 236, 334, 336) verbunden sind, und dass durch Verlaufsänderung der zweiten Längsseiten die Querschnittsänderung des Sonotrodenkopfes (220, 320) erfolgt.

6. Sonotrode nach zumindest einem der vorhergehenden Ansprüche,
**dadurch gekennzeichnet,**
**dass** der Sonotrodenkopf (220, 320) über einen Sonotrodenhals (222, 322) mit dem Sonotrodenkörper (224, 324) verbunden ist, dass der Querschnitt des Halses (222, 322) von dem Sonotrodenkopf ausgehend abnimmt, eine Linie oder einen Bereich geringsten Querschnitts durchläuft und sodann in Richtung des Sonotrodenkörpers wieder zunimmt, wobei der Querschnitt des Sonotrodenkopfes (220, 320) im stirnseitigen Endbereich (242, 342) der Arbeitsflächen (230, 232, 330, 332) Q2 ist, dass bei von stirnseitigem Endbereich (244) der Arbeitsflächen ausgehendem sich bis hin zum sonotrodenkörperseitigen Endbereich (246) verjüngendem Querschnitt des Sonotrodenkörpers der Querschnitt im sonotrodenkörperseitigen Endbereich Q3 ist und der geringste Querschnitt des Halses Q1 ist, oder
**dass** bei vom stirnseitig verlaufenden Endbereich (244) der Arbeitsflächen ausgehendem zunächst abnehmenden und sodann zum sonotrodenkörperseitigen Endbereich (346) zunehmenden Querschnitt der Querschnitt im sonotrodenkörperseitigen Endbereich Q4 ist, der Querschnitt im Bereich geringsten Querschnitts zwischen stirnseitigem und sonotrodenkörperseitigem Endbereich Q5 ist, der Querschnitt im stirnseitig verlaufenden Endbereich Q2 ist und der geringste Querschnitt des Halses Q6 ist, wobei
Q2:Q1 zwischen 2,0:1 und 1,1:1 und/oder
Q2:Q3 zwischen 2,0:1 und 1,05:1 und/oder
Q2:Q5 zwischen 2,0:1 und 1,05:1 und/oder
Q2:Q6 zwischen 2,0:1 und 1,1:1 und/oder
Q4:Q5 zwischen 2,0:1 und 1,05:1 und/oder
Q3:Q1 zwischen 1,5:1 und 1,1:1 und/oder
Q5:Q6 zwischen 1,5:1 und 1,1:1 und/oder
sind mit der Nebenbedingung, dass Q1 kleiner als Q2, Q3 und Q6 kleiner als Q2, Q4, Q5 und Q3 kleiner als Q2 und Q5 kleiner als Q2, Q4 sind,
wobei insbesondere Q2:Q3 sich verhält zwischen 1,05:1 und 1,20:1, vorzugsweise zwischen 1,05:1 und 1,15:1, insbesondere etwa 1,1:1, und/oder insbesondere Q5:Q6 sich verhält wie 1,21:1 bis 1,30:1, insbesondere in etwa 1,26:1, und/oder
insbesondere Q2:Q6 zwischen 1,40:1 und 1,55:1, insbesondere etwa 1,47:1, und/oder
insbesondere Q2:Q5 zwischen 1,12:1 und 1,20:1, insbesondere in etwa 1,16:1, und/oder
insbesondere Q2:Q1 zwischen 1,20:1 und 2,20:1, vorzugsweise 1,22:1 und 1,30:1, insbesondere in etwa 1,26:1, und/oder
insbesondere Q2:Q4 zwischen 1:1 und 1,04:1, insbesondere etwa 1,02:1.

7. Verfahren zur Beeinflussung des Schwingungsverhaltens eines Sonotrodenkopfes (220, 320) einer in Längsrichtung schwingenden Sonotrode (218, 318, 418) einer Ultraschallmetallschweißvorrichtung zum Schweißen, Verschweißen, Verformen und/oder Schneiden von metallischem Schweißgut, wobei der Sonotrodenkopf über einen Hals (222, 322) mit einem Sonotrodenkörper (224, 324) verbunden ist, der Sonotrodenkopf in dessen Längsrichtung diametral und insbesondere parallel zueinander verlaufende Arbeitsflächen (230, 232, 330, 332) aufweist, die sich entlang erster Längsseiten (226, 228) erstrecken, die ihrerseits über zweite Längsseiten (234, 236, 334, 336) verbunden sind,
**dadurch gekennzeichnet,**
**dass** ein Sonotrodenkopf (220, 320) verwendet wird, dessen zweite Längsseiten (234, 236, 334, 336) derart bearbeitet sind, dass entlang der Arbeitsflächen (230, 232, 330, 332) eine Querschnittsänderung des Sonotrodenkopfes (220, 320) erfolgt.

8. Verfahren nach Anspruch 7,
**dadurch gekennzeichnet,**
**dass** die Bearbeitung derart erfolgt, dass der Querschnitt des Sonotrodenkopfes (220, 320) im stirnseitig verlaufenden Endbereich (244, 246, 344, 346) der Arbeitsfläche (230, 232, 330, 332) größer als im Mittenbereich der Arbeitsfläche ist.

9. Verfahren nach Anspruch 7 oder 8,
**dadurch gekennzeichnet,**
**dass** die zweiten Längsseiten (234, 236) derart bearbeitet werden, dass Abstand der zweiten Längsseiten von stirnseitig verlaufendem Endbereich (244) der Arbeitsflächen (230, 232) ausgehend bis hin zum sonotrodenkörperseitig verlaufenden Endbereich (246) der Arbeitsflächen abnimmt, vorzugsweise stetig abnimmt.

10. Verfahren nach Anspruch 7 oder 8,
**dadurch gekennzeichnet,**
**dass** ein Bearbeiten der zweiten Seitenflächen (334, 336) derart erfolgt, dass die zweiten Seitenflächen einen konkaven Verlauf erhalten, und der Hals (322) derart verjüngt wird, dass sich ein geringster Querschnitt Q6 ergibt, wobei sich geringster Querschnitt Q5 des Sonotrodenkopfes (320) zum geringsten Querschnitt Q6 des Halses (322) verhält wie Q5 : Q6 zwischen 1,5:1 und 1,1:1, vorzugsweise zwischen 1,21:1 und 1,30:1, insbesondere 1,26:1, und/oder Querschnitt Q2 im stirnseitig verlaufenden Randbereich (344) der Arbeitsfläche (330, 332) sich zum geringsten Querschnitt Q6 des Halses verhält wie Q2:Q6 zwischen 2,0:1 und 1,1:1, vorzugsweise zwischen 1,40:1 und 1,55:1, insbesondere 1,47:1, und/oder Querschnitt Q2 des Sonotrodenkopfes im stirnseitig verlaufenden Bereich der Arbeitsfläche sich zu Q5 verhält wie Q2:Q5 zwischen 2,0:1 und 1,05:1, vorzugsweise zwischen 1,12:1 und 1,20:1, insbesondere 1,16:1.

11. Verfahren nach zumindest Anspruch 8,
**dadurch gekennzeichnet,**
**dass** eine Bearbeitung der zweiten Längsseiten (234, 236) derart erfolgt, dass sich der Querschnitt Q2 im stirnseitigen Endbereich (244) der Arbeitsflächen (230, 232) zum Querschnitt Q3 im sonotrodenkörperseitigen Endbereich (246) sich verhält zwischen 2,0:1 und 1,05:1, insbesondere zwischen 1,05:1 und 1,20:1, vorzugsweise zwischen 1,05:1 und 1,15:1, insbesondere etwa 1,1:1, und/oder zum geringsten Querschnitt Q1 des Halses (222) sich verhält zwischen 2,0:1 und 1,1:1, insbesondere zwischen 1,20:1 und 2,20:1, vorzugsweise 1,22:1 und 1,30:1, insbesondere in etwa 1,26:1.

## Claims

1. A sonotrode (218, 318, 418) of an ultrasonic welding device with a sonotrode body (224, 324) with sonotrode head (220, 320) with at least one working surface (230, 232, 330, 332) extending in the longitudinal direction of the sonotrode head for welding or welding together and/or deforming and/or cutting at least one item of metallic welding material, wherein the sonotrode head (220, 320) has mutually differing cross-sections along the working surface (230, 232, 330, 332),
**characterised in that**
the cross-section of the sonotrode head (220, 320) in the end region (244, 344) of the working surface (230, 232, 330, 332) extending at the end face is greater than in the middle region of the working surface.

2. The sonotrode according to claim 1,
**characterised in that**
the cross-section of the sonotrode head (220, 320) reduces from the end region (244, 344) of the working surface (230, 232, 330, 332) extending at the end face up to the end region (246, 346) on the sonotrode body side, in particular reduces constantly.

3. The sonotrode according to claim 1,
**characterised in that**
the cross-section of the sonotrode head (320) initially reduces from the end region (344) of the working surface (330, 332) extending at the end face and then increases to the end region (346) of the working surface (330, 332) on the sonotrode body side.

4. The sonotrode according to claim 3,
**characterised in that**
the cross-section of the sonotrode head (320) is at its smallest in the middle region of the working surface (330, 332).

5. The sonotrode according to at least one of the preceding claims,
**characterised in that**
the sonotrode head (220, 320) has working surfaces (230, 232, 330, 332) extending parallel to one another at first longitudinal sides (226, 228, 326, 328), wherein the first longitudinal sides are connected via second longitudinal sides (234, 236, 334, 336), and **in that** the cross-sectional change of the sonotrode head (220, 320) takes place by changing the profile of the second longitudinal sides.

6. The sonotrode according to at least one of the preceding claims,
**characterised in that**
the sonotrode head (220, 320) is connected to the sonotrode body (224, 324) via a sonotrode neck (222, 322), **in that** the cross-section of the neck (222, 322) reduces starting from the sonotrode head, passes through a line or a region of smallest cross-section and then increases again towards the sonotrode body, wherein the cross-section of the sonotrode head (220, 320) is Q2 in the end-face end region (242, 342) of the working surfaces (230, 232, 330, 332), **in that**, in the case of a cross-section of the sonotrode body tapering from the end-face end region (244) of the working surfaces up to the end region (246) on the sonotrode body side, the cross-section in the sonotrode body-side end region is Q3 and the smallest cross-section of the neck is Q1, or
**in that**, in the case of the cross-section initially reducing from the end region (244) of the working surfaces extending at the end face and then increasing to the sonotrode body-side end region (346), the cross-section in the sonotrode body-side end region is Q4, the cross-section in the region of smallest cross-section between end-face and sonotrode body-side end region is Q5, the cross-section in the end region extending at the end face is Q2 and the smallest cross-section of the neck is Q6, wherein
Q2:Q1 is between 2.0:1 and 1.1:1 and/or
Q2:Q3 is between 2.0:1 and 1.05:1 and/or
Q2:Q5 is between 2.0:1 and 1.05:1 and/or
Q2:Q6 is between 2.0:1 and 1.1:1 and/or
Q4:Q5 is between 2.0:1 and 1.05:1 and/or
Q3:Q1 is between 1.5:1 and 1.1:1 and/or
Q5:Q6 is between 1.5:1 and 1.1:1 and/or
with the secondary condition that Q1 is smaller than Q2, Q3 and Q6 is smaller than Q2, Q4, Q5 and Q3 are smaller than Q2 and Q5 is smaller than Q2, Q4,
wherein in particular Q2:Q3 is between 1.05:1 and 1.20:1, preferably between 1.05:1 and 1.15:1, in particular approximately 1.1:1, and/or
in particular Q5:Q6 is 1.21:1 to 1.30:1, in particular approximately 1.26:1, and/or in particular Q2:Q6 is between 1.40:1 and 1.55:1, in particular approximately 1.47:1, and/or
in particular Q2:Q5 is between 1.12:1 and 1.20:1, in particular approximately 1.16:1, and/or
in particular Q2:Q1 is between 1.20:1 and 2.20:1, preferably 1.22:1 and 1.30:1, in particular approximately 1.26:1, and/or
in particular Q2:Q4 is between 1:1 and 1.04:1, in particular approximately 1.02:1.

7. A method for influencing the vibration behaviour of a sonotrode head (220, 320) of a longitudinally vibrating sonotrode (218, 318, 418) of an ultrasonic metal welding device for welding, welding together, deforming and/or cutting metallic welding material, wherein the sonotrode head is connected to a sonotrode body (224, 324) via a neck (222,322), and the sonotrode head has working surfaces (230, 232, 330, 332) running diametrically and in particular parallel to one another in the longitudinal direction of said head, which working surfaces extend along first longitudinal sides (226, 228), which are in turn connected via second longitudinal sides (234, 236, 334, 336),
**characterised in that**
a sonotrode head (220, 320) is used whose second longitudinal sides (234, 236, 334, 336) are machined in such a way that a cross-sectional change to the sonotrode head (220, 320) takes place along the working surfaces (230, 232, 330, 332).

8. The method according to claim 7,
**characterised in that**
the machining proceeds in such a way that the cross-section of the sonotrode head (220, 320) in the end region (244, 246, 344, 346) of the working surface (230, 232, 330, 332) extending at the end face is greater than in the middle region of the working surface.

9. The method according to claim 7 or claim 8,
**characterised in that**
the second longitudinal sides (234, 236) are machined in such a way that the spacing of the second longitudinal sides reduces from the end region (244) of the working surfaces (230, 232) extending at the end face up to the end region (246) of the working surfaces extending on the sonotrode body side, preferably reduces constantly.

10. The method according to claim 7 or claim 8,
**characterised in that**
machining of the second side faces (334, 336) proceeds in such a way that the second side faces receive a concave profile, and the neck (322) is tapered in such a way that a smallest cross-section Q6 is obtained, wherein the smallest cross-section Q5 of the sonotrode head (320) is in a ratio to the smallest cross-section Q6 of the neck (322) such that Q5 : Q6 is between 1.5:1 and 1.1:1, preferably between 1.21:1 and 1.30:1, in particular 1.26:1, and/or cross-section Q2 in the peripheral region (344) of the working surface (330, 332) extending at the end face is in a ratio to the smallest cross-section Q6 of the neck such that Q2:Q6 is between 2.0:1 and 1.1:1, preferably between 1.40:1 and 1.55:1, in particular 1.47:1, and/or cross-section Q2 of the sonotrode head in the region of the working surface extending at the end face is in a ratio to Q5 such that Q2:Q5 is between 2.0:1 and 1.05:1, preferably between 1.12:1 and 1.20:1, in particular 1.16:1.

11. The method according to at least claim 8,
**characterised in that**
machining of the second longitudinal sides (234, 236) proceeds in such a way that the cross-section Q2 in the end-face end region (244) of the working surfaces (230, 232) is in a ratio to the cross-section Q3 in the sonotrode body-side end region (246) of between 2.0:1 and 1.05:1, in particular between 1.05:1 and 1.20:1, preferably between 1.05:1 and 1.15:1, in particular approximately 1.1:1, and/or to the smallest cross-section Q1 of the neck (222) of between 2.0:1 and 1.1:1, in particular between 1.20:1 and 2.20:1, preferably 1.22:1 and 1.30:1, in particular approximately 1.26:1.

## Revendications

1. Sonotrode (218, 318, 418) d'une installation de soudure par ultrasons avec un corps de sonotrode (224, 324) avec une tête de sonotrode (220, 320) avec au moins une surface de travail (230, 232, 330, 332) s'étendant dans le sens longitudinal de la tête de sonotrode pour souder ou souder ensemble et/ou façonner et/ou couper au moins un métal de soudure, sachant que la tête de sonotrode (220, 230) présente des sections différentes les unes des autres le long de la surface de travail (230, 232, 330, 332),
**caractérisée en ce**
**que** la section de la tête de sonotrode (220, 230) dans la zone terminale (244, 344) de la surface de travail (230, 232, 330, 332), s'étendant du côté frontal est supérieure à la section dans la zone centrale de la surface de travail.

2. Sonotrode selon la revendication 1,
**caractérisée en ce**
**que** la section de la tête de sonotrode (220, 230) diminue partant de la zone terminale (244, 344) de la surface de travail (230, 232, 330, 332), s'étendant du côté frontal, notamment diminue constamment, jusqu'à la zone terminale (246, 346) du côté du corps de sonotrode.

3. Sonotrode selon la revendication 1,
**caractérisée en ce**
**que** la section de la tête de sonotrode (320) diminue tout d'abord en partant de la zone terminale (344) de la surface de travail (330, 332), s'étendant du côté frontal, puis augmente vers la zone terminale (346) de la surface de travail (330, 332), du côté du corps de sonotrode.

4. Sonotrode selon la revendication 3,
**caractérisée en ce**
**que** la section de la tête de sonotrode (320) est minimale dans la zone centrale de la surface de travail (330, 332).

5. Sonotrode selon au moins une des revendications précédentes,
**caractérisée en ce**
**que** la tête de sonotrode (220, 320) présente des surfaces de travail (230, 232, 330, 332) parallèles entre elles dans des premiers côtés longitudinaux (226, 228, 326, 328), sachant que les premiers côtés longitudinaux sont reliés via des seconds côtés longitudinaux (234, 236, 334, 336) et que le changement de section de la tête de sonotrode (220, 320) est réalisé par le changement de tracé des seconds côtés longitudinaux.

6. Sonotrode selon au moins une des revendications précédentes,
**caractérisée en ce**
**que** la tête de sonotrode (220, 320) est reliée au corps de sonotrode (224, 324) par un col de sonotrode (222, 322), que la section du col (222, 322) diminue en partant de la tête de sonotrode, traverse une ligne ou une zone de moindre section, puis augmente à nouveau en direction du corps de sonotrode, sachant que la section de la tête de sonotrode (220, 320) est Q2 dans la zone terminale (242, 324) des surfaces de travail (230, 232, 330, 332), du côté frontal, que pour la section du corps de sonotrode, rétrécissant en partant de la zone terminale (244) des zones de travail, côté frontal jusqu'à la zone terminale (246) du côté du corps de sonotrode, la section est Q3 dans la zone terminale du côté du corps de sonotrode et que la section minimale du col est Q1, ou
**que** pour la section diminuant tout d'abord en partant de la zone terminale (244) des surfaces de travail, s'étendant du côté frontal, puis augmentant jusqu'à la zone terminale (346) du côté du corps de sonotrode, la section est Q4 dans la zone terminale du côté du corps de sonotrode, la section est Q5 dans la zone de section minimale entre la zone terminale côté frontal et côté corps de sonotrode, la section est Q2 dans la zone terminale s'étendant du côté frontal et que la section minimale du col est Q6, sachant que
Q2:Q1 est compris entre 2,0:1 et 1,1:1 et/ou
Q2:Q3 est compris entre 2,0:1 et 1,05:1 et/ou
Q2:Q5 est compris entre 2,0:1 et 1,05:1 et/ou
Q2:Q6 est compris entre 2,0:1 et 1,1:1 et/ou
Q4:Q5 est compris entre 2,0:1 et 1,05:1 et/ou
Q3:Q1 est compris entre 1,5:1 et 1,1:1 et/ou
Q5:Q6 est compris entre 1,5:1 et 1,1:1 et/ou
à la condition supplémentaire que Q1 est inférieure à Q2, Q3 et Q6 sont inférieures à Q2, Q4, Q5 et Q3 sont inférieures à Q2 et Q5 est inférieure à Q2, Q4,
sachant notamment que Q2:Q3 se situe entre 1,05:1 et 1,20:1, de préférence entre 1,05:1 et 1,15:1, en particulier environ à 1,1:1, et/ou
notamment Q5:Q6 se situe entre 1,21:1 et 1,30:1, notamment environ à 1,26:1, et/ou notamment Q2:Q6 se situe entre 1,40:1 et 1,55:1, notamment environ à 1,47:1, et/ou notamment Q2:Q5 se situe entre 1,12:1 et 1,20:1, notamment environ à 1,16:1, et/ou notamment Q2:Q1 se situe entre 1,20:1 et 2,20:1, de préférence entre 1,22:1 et 1,30:1, en particulier environ à 1,26:1, et/ou
notamment Q2:Q4 se situe entre 1:1 et 1,04:1, notamment environ à 1,02:1.

7. Procédé pour influencer le comportement vibratoire d'une tête de sonotrode (220, 320) d'une sonotrode (218, 318, 418) vibrant dans le sens longitudinal, d'un dispositif de soudure par ultrasons pour souder, souder ensemble, façonner et/ou couper du métal de soudure, sachant que la tête de sonotrode est reliée au corps de sonotrode (224, 324) par un col (222, 322), la tête de sonotrode présente des surfaces de travail (230, 232, 330, 332) s'étendant diamétralement dans son sens longitudinal et notamment parallèlement les unes aux autres et qui s'étendent le long des premiers côtés longitudinaux (226, 228) qui sont reliés eux-mêmes via de seconds côtés longitudinaux (234, 236, 334, 336).
**caractérisé en ce**
**qu'**est utilisée une tête de sonotrode (220, 320) dont les seconds côtés longitudinaux (234, 236, 334, 336) sont usinés de sorte qu'un changement de section de la tête de sonotrode (220, 320) a lieu le long des surfaces de travail (230, 232, 330, 332).

8. Procédé selon la revendication 7,
**caractérisé en ce**
**que** l'usinage a lieu de sorte que la section de la tête de sonotrode (220, 230) dans la zone terminale (244, 246, 244, 344) de la surface de travail (230, 232, 330, 332), s'étendant du côté frontal est supérieure à la section dans la zone centrale de la surface de travail.

9. Procédé selon la revendication 7 ou 8,
**caractérisé en ce**
**que** les seconds côtés longitudinaux (234, 236) sont usinés de telle sorte que l'écart des seconds côtés diminue, de préférence diminue constamment, en partant de la zone terminale (244) des surfaces de travail (230, 232) s'étendant du côté frontal jusqu'à la zone terminale (246) des surfaces de travail, s'étendant du côté du corps de sonotrode.

10. Procédé selon la revendication 7 ou 8,
**caractérisé en ce**
**qu'**un usinage des secondes surfaces latérales (334, 336) a lieu de telle sorte que les secondes surfaces latérales reçoivent un tracé concave, et que le col (322) se rétrécit de sorte à former une section Q6 minimale, sachant que la section minimale Q5 de la tête de sonotrode (320) se comporte par rapport à la section minimale Q6 du col telle que Q5:Q6 se situe entre 1,5:1 et 1,1:1, de préférence entre 1,21:1 et 1,30:1, notamment à 1,26:1, et/ou la section Q2 dans la zone marginale (344) de la surface de travail (330, 332), s'étendant du côté frontal se comporte par rapport à la section minimale Q6 du col telle que Q2:Q6 se situe entre 2,0:1 et 1,1:1, de préférence entre 1,40:1 et 1,55:1, notamment à 1,47:1, et/ou que la section Q2 de la tête de sonotrode dans la zone de la surface de travail, s'étendant du côté frontal se comporte par rapport à Q5 telle que Q2:Q5 se situe entre 2,0:1 et 1,05:1, de préférence entre 1,12:1 et 1,20:1, notamment à 1,16:1.

11. Procédé selon au moins la revendication 8,
**caractérisé en ce**
**qu'**un usinage des seconds côtés longitudinaux (234, 236) a lieu de sorte que la section Q2 dans la zone terminale (244) des surfaces de travail (230, 232), s'étendant du côté frontal se situe par rapport à la section Q3 dans la zone terminale (246) du côté du corps de la sonotrode entre 2,0:1 et 1,05:1, notamment entre 1,05:1 et 1,20:1, de préférence entre 1,05:1 et 1,15:1, notamment environ à 1,1:1, et/ou se situe par rapport à la section minimale Q1 du col (222) entre 2,0:1 et 1,1:1, notamment entre 1,20:1 et 2,20:1, de préférence 1,22:1 et 1,30:1, notamment environ à 1,26:1.
